## Europäisches Patentamt

## European Patent Office

## Office européen des brevets

(19)

(11) **EP 1 535 660 A1**

(12) **EUROPÄISCHE PATENTANMELDUNG**

(43) Veröffentlichungstag:
01.06.2005 Patentblatt 2005/22

(51) Int Cl.⁷: **B01J 19/08**, C01B 3/34

(21) Anmeldenummer: 04027771.7

(22) Anmeldetag: 23.11.2004

(84) Benannte Vertragsstaaten:
**AT BE BG CH CY CZ DE DK EE ES FI FR GB GR HU IE IS IT LI LU MC NL PL PT RO SE SI SK TR**
Benannte Erstreckungsstaaten:
**AL HR LT LV MK YU**

(30) Priorität: **26.11.2003 DE 10355227**

(71) Anmelder: **Fricke, Uwe, Stefan**
**22459 Hamburg (DE)**

(72) Erfinder:
• **Der Erfinder hat auf seine Nennung verzichtet.**

(74) Vertreter: **Volpert, Marcus et al**
**Zeitler - Volpert - Kandlbinder**
**Patentanwälte**
**Herrnstrasse 44**
**80539 München (DE)**

(54) **Vorrichtung zum Erzeugen wenigstens eines fluiden Reaktionsproduktes aus wenigstens einem fluiden Ausgangsstoff mittels chemischer Reaktion im Plasma dielektrisch behinderter Entladungen**

(57) 1. Vorrichtung zum Erzeugen wenigstens eines fluiden Reaktionsproduktes aus wenigstens einem fluiden Ausgangsstoff mittels chemischer Reaktion im Plasma dielektrisch behinderter Entladungen.

2.1 Mit Hilfe der neuen Vorrichtung soll es möglich sein. chemische Reaktionen on-board beispielsweise auch in Kraftfahrzeugen durchführen zu können.

2.2 Die Vorrichtung (1) hat eine erste Elektrode (5) aus einem porösen, mit dem wenigstens einen Reaktionsprodukt (2) und dem wenigstens einen Ausgangsstoff (3) durchströmbaren, elektrisch leitfähigen Körper (6), an welcher ersten Elektrode eine Hochspannung von wenigstens 0,5 kV anliegt, eine zweite Elektrode (10) aus einem ebensolchen Körper (6), welche mit Masse (11) verbunden und der ersten Elektrode (5) zugeordnet ist. und zwischen den durchströmbaren Elektroden (5, 10) eine dielektrische, vorzugsweise photokatalytische Schicht (12).

2.3 Herstellung insbesondere von wasserstoffreichem Brenngas für mit Brennstoffzellen ausgerüsteten Kraftfahrzeugen.

Fig. 1

**Beschreibung**

Die Erfindung bezieht sich auf eine Vorrichtung zum Erzeugen wenigstens eines fluiden Reaktionsproduktes aus wenigstens einem fluiden Ausgangsstoff mittels chemischer Reaktion im Plasma dielektrisch behinderter Entladungen.

Der Begriff "fluid" bezeichnet hier einen gas- oder dampfförmigen oder flüssigen Stoff.

Aus dem Artikel von Bromberg, L. et al. mit dem Titel "Onboard-Plasmatron-Erzeugung wasserstoffreicher Gase für die Abgasnachbehandlung von Dieselmotoren und andere Anwendungen" (Onboard Plasmatron Generation of Hydrogen Rich Gas for Diesel Engine Exhaust Aftertreatment and Other Applications) vom 11. Dezember 2002 ist ein Plasmatron-Reformer zum Umwandeln von Dieselkraftstoff und anderen schwierig zu reformierenden Kraftstoffen, wie zum Beispiel Bioölen, in wasserstoffreiches Gas bekannt. Die Diesel-Plasmatron-Reformertechnologie kann nennenswerte Durchsätze ohne das Erfordernis der Verwendung eines Katalysators bereitstellen. Die Verwendung eines speziellen Plasmas erleichtert die nicht katalytische Umwandlung des Dieselkraftstoffs in ein wasserstoffreiches Gas mit Wasserstoffausbeuten, die für Anwendungen zum Erzeugen einer $NO_x$-Falle hinreichend sein können.

Im Falle von mit Brennstoffzellen betriebenen Kraftfahrzeugen kann es erforderlich sein, große Mengen an Wasserstoff aus Kohlenwasserstoffen, insbesondere aus Methan oder Erdgas, Flüssiggasen, vergastem Benzin oder vergastem Diesel, herzustellen. Ein solcher Prozess kann on-board, das heißt unmittelbar im Kraftfahrzeug, erfolgen.

Der Erfindung liegt die Aufgabe zugrunde, eine Vorrichtung der eingangs erwähnten Art zu schaffen, mittels der fluide Reaktionsprodukte besonders vorteilhaft on-board herstellbar sind.

Diese Aufgabe wird erfindungsgemäß durch eine Vorrichtung mit den Merkmalen des Patentanspruchs 1 gelöst.

Die erste und zweite Elektrode jedes Elektrodenpaars ist jeweils aus einem porösen. mit dem wenigstens einen fluiden Reaktionsprodukt und dem wenigstens einen fluiden Ausgangsstoff durchströmbaren, flächigen, elektrisch leitfähigen Körper gebildet. Die Porosität jedes durchströmbaren Körpers begünstigt das Vorsehen einer großen Stoffaustauschfläche und damit eines guten Stoffübergangs bzw. das Vorsehen einer großen Reaktionsfläche zum Durchführen der chemischen Reaktion und damit eine gute Ausbeute an dem wenigstens einen fluiden Reaktionsprodukt. Die zwischen den durchströmbaren Elektroden vorgesehene, dielektrische Schicht ermöglicht eine sogenannte dielektrisch behinderte Entladung, auch "stille" Entladung genannt, (Englisch: Dielectric Barrier Discharge DBD) und vermeidet dadurch die Ausbildung eines oder mehrerer Lichtbögen zwischen den Elektroden, welche in der Vorrichtung zu hohe Temperaturen erzeugen würden, so dass die Gefahr bestände, dass die Vorrichtung zumindest teilweise überhitzt, dadurch zerschmelzen und letztlich zerstört würde. Aufgrund der dielektrisch behinderten Entladungen können sich lediglich ein Glühplasma oder sogenannte Mikroentladungen (Englisch: microdischarges) zwischen den Elektroden ausbilden. welche plasmachemische Reaktionen ermöglichen und durch die damit verbundene UV-Licht Emission die auf den Körperoberflächen befindliche. vorzugsweise photokatalytische Grenzflächen anregen und per Elektronentausch die chemischen Bindungen cracken können.

Vorteilhafterweise beträgt die Hochspannung 0,5 bis etwa 30 kV, vorzugsweise etwa 15 kV, bei einer Frequenz zwischen 50 Hz und etwa 100 kHz und ist die Hochspannung vorzugsweise gepulst. Bei einer solchen Hochspannung lassen sich die gepulsten Mikroentladungen ohne weiteres erzielen. Das Pulsen der Hochspannung verbessert die Strahlungswirkung. Je steiler beim Pulsen die Flankensteilheit des Spannungsstoßes ist, umso besser ist die Wirkung des Spannungsstoßes, nämlich die Ausbildung von Photonenemissionen der Mikroentladungen im Ultraviolett (UV)- Bereich.

Gemäß einer vorteilhaften Weiterbildung der Erfindung weist zumindest eine der einander zugewandten Oberflächen der Elektroden oder weisen beide einander zugewandten Oberflächen der Elektroden und vorzugsweise auch die voneinander abgewandten Oberflächen der Elektroden oder weist besonders bevorzugt die sichtbare Oberfläche jeder Elektrode die dielektrische Schicht auf. Bei diesem Ausführungsbeispiel ist also die dielektrische Schicht unmittelbar auf dem Körper der Elektrode aufgebracht. Zumindest ein Teil der Oberfläche jeder Elektrode ist mit der dielektrischen Schicht versehen, so dass letztere keinen gesonderten. separaten Träger erfordert. Als Träger für die dielektrische Schicht dient vielmehr der ohnehin vorhandene Körper jeder Elektrode, so dass dieser im Sinne einer Doppelwirkung zum einen die Elektrode selbst bildet, zum anderen auch als Träger für die dielektrische Schicht dient.

Gemäß einer anderen Weiterbildung der Erfindung weisen die Körper der Elektroden gesinterte. vorzugsweise schmelzextrahierte Metallfasern auf, die vorzugsweise aus Edelstahl mit hohem katalytisch wirksamen Nickelanteil oder aus Nickel oder aus Edelstahl mit Raney-Nickel-Oberfläche gebildet sind. Derartige Elektrodenkörper sind einerseits hinreichend porös und bieten andererseits eine ausreichende Festigkeit bei gleichzeitig guter elektrischer Leitfähigkeit. Eine hohe Porosität der Metallfasern begünstigt einen niedrigen Druckverlust. welche die durch die Körper der Elektroden strömenden Stoffe erleiden. Damit reduziert sich der zum Durchströmen der Elektruden erforderliche Energieaulvancl.

Gemäß einer besonders bevorzugten Ausführungsform der Erfindung ist die dielektrische Schicht eine Dünnschicht, vorzugsweise eine photokatalytische Dünnschicht aus Titandioxid $TiO_2$, besonders bevorzugt aus dem $TiO_2$-Mineral Anatas. Die photokatalytische Ausgestaltung der dielektrischen Schicht begünstigt die Ausbildung der Mikroentladungen und kann dadurch die Anregung der Reaktionsflächen zwecks Durchführung der chemischen Reaktion erhöhen. Die photokatalytische Zersetzung des oder der Ausgangsstoffe begünstigt daher das Herstellen oder Erzeugen des wenigstens einen fluiden Reaktionsproduktes. Dadurch ist der Wirkungsgrad der erfindungsgemäßen Vorrichtung verbessert.

Gemäß einer anderen Weiterbildung der Erfindung weist jede Elektrode zwischen ihrem porösen Körper und der dielektrischen Schicht dieses Körpers eine vorzugsweise aus Titan Ti als Haftvermittler gebildete Übergangsschicht auf. Dadurch ist die dielektrische Schicht sicher an ihrem Träger, dem porösen Körper jeder Elektrode, gehalten. Ein Abblättern der dielektrischen Schicht ist damit wirksam verhindert.

Vorteilhafterweise sind die porösen Körper platten-, rohr- oder kugelförmig ausgebildet und ohne Belassung eines gegenseitigen Abstandes unmittelbar auf- oder nebeneinander oder konzentrisch zueinander oder unter Belassung eines gegenseitigen Abstandes und Ausbildung eines erweiterten Entladungsspaltes auf- oder nebeneinander oder konzentrisch zueinander angeordnet. Damit können die porösen Körper der Elektroden stark unterschiedliche Formen annehmen. Sie können unmittelbar neben- bzw. aneinander oder beabstandet voneinander angeordnet sein. Die Belassung eines gegenseitigen Abstandes zwischen den Elektroden. das heißt die Ausbildung eines erweiterten Entladungsspaltes. verbessert die elektrische Durchschlagsfestigkeit der Anordnung. Außerdem lässt sich die Intensität und gegebenenfalls auch die Häufigkeit der Mikroentladungen durch den gegenseitigen Abstand der Elektroden steuern oder beeinflussen.

Gemäß einer anderen Weiterbildung der Erfindung ist zwischen den Körpern der Elektroden und damit im erweiterten Entladungsspalt eine mit dem wenigstens einen fluiden Reaktionsprodukt und dem wenigstens einen fluiden Ausgangsstoff durchströmbare. ein Dielektrikum bildende Platte angeordnet. welche zumindest eine photokatalytische Schicht. vorzugsweise Dünnschicht. aufweisen und aus Schaumkeramik oder versinterten Keramikfasem hergestellt sein kann. Damit ist es auch möglich, die dielektrische Schicht bzw. das Dielektrikum ausschließlich oder zusätzlich als durchströmbare Platte auszubilden. an deren gegenüberliegenden Enden bzw. Oberflächen die Elektroden mit ihren porösen Körpern aufliegen. Die Ausbildung der Plattenanordnung stellt die Reaktionszone eines Plasmareaktors dar. welche durch die serielle Anordnung der Platten variiert und damit an die Erfordernisse der gewünschten chemischen Reaktionen anpassbar ist.

Gemäß einer vorteilhaften Weiterbildung der Erfindung sind die Körper der Elektroden im Wesentlichen senkrecht zu ihrer Hauptflächenausdehnung, das heißt in Richtung ihrer Dicke. durchströmbar. Da die Dikke der Elektroden im Verhältnis zu ihrer Hauptflächenausdehnung üblicherweise gering ist, folgt daraus für den wenigstens einen Huiden Ausgangsstoff und das wenigstens eine fluide Reaktionsprodukt ein relativ kurzer Strömungsweg pro Elektrodenpaar. was auch die für die chemische Reaktion erforderliche Reaktionszeit und die Abmessungen der erfindungsgemäßen Vorrichtung günstig beeinflussen kann.

Gemäß einer Weiterbildung der Erfindung sind mehrere Paare von Elektroden vorzugsweise modul- und stapelartig in Strömungsrichtung hintereinander und etwa parallel zueinander angeordnet. Dadurch können die Elektrodenpaare sandwichartig in einem Plattenstapel kaskadiert angeordnet sein.

Vorteilhafterweise bilden sich zwischen den Elektroden Mikroentladungen aus, welche ein Niedertemperaturplasma erzeugen, wobei die Photonenemissionen der Mikroentladungen die vorzugsweise photokatalytischen Grenzflächen zum Cracken der chemischen Bindungen durch Elektronentausch anregen. Derartige Prozesse können bei moderaten Prozesstemperaturen von unter 200°C stattfinden, was deren Einsatz im on-board-Betrieb weiter begünstigt.

Gemäß einer besonders bevorzugten Ausführungsform der Erfindung ist der wenigstens eine fluide Ausgangsstoff ein Gemisch aus Kohlenwasserstoffen, vorzugsweise einem Brennstoff wie Methan $CH_4$ oder Erdgas. Flüssiggas, Alkoholen, vergastem Benzin oder vergastem Diesel. und Wasser $H_2O$, vorzugsweise Wasserdampf. und das wenigstens eine fluide Reaktionsprodukt vorzugsweise ein Gemisch aus Wasserstoff $H_2$ und Kohlendioxid $CO_2$. Damit ist es möglich, die erfindungsgemäße Vorrichtung auch bzw. vornehmlich zur Gewinnung von Wasserstoff einzusetzen, welcher im Falle von Fahrzeugen mit Brennstoffzelle zum Antreiben des Fahrzeugs verwendet werden kann. Die erfindungsgemäße Vorrichtung kann damit vorzugsweise aber nicht ausschließlich im Kraftfahrzeug im on-board-Betrieb zum Einsatz kommen

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:

Fig. 1 eine schematische. teilweise geschnittene Seitenansicht einer Vorrichtung zum Erzeugen wenigstens eines fluiden Reaktionsproduktes aus wenigstens einem fluiden Ausgangsstoff mittels chemischer Reaktion und dielektrisch behinderter Entladungen gemäß einer ersten Ausführungsform;

Fig. 2 eine schematische. teilweise geschnittene Seitenansicht der Vorrichtung gemäß einer zweiten Ausführungsform;

Fig. 3 eine schematische, teilweise geschnittene Seitenansicht der Vorrichtung gemäß einer dritten Ausführungsform;

Fig. 4 eine schematische. teilweise geschnittene und vergrößerte Seitenansicht eines Teils der Elektroden der Vorrichtung gemäß einer Ausführungsform; und

Fig. 5 eine schematische, teilweise geschnittene und vergrößerte Seitenansicht eines Teils der Elektroden der Vorrichtung gemäß einer anderen Austiihrungsform.

In den Zeichnungen sind die einen Schnitt symbolisierenden Schraffuren der Einfachheit halber weggelassen.

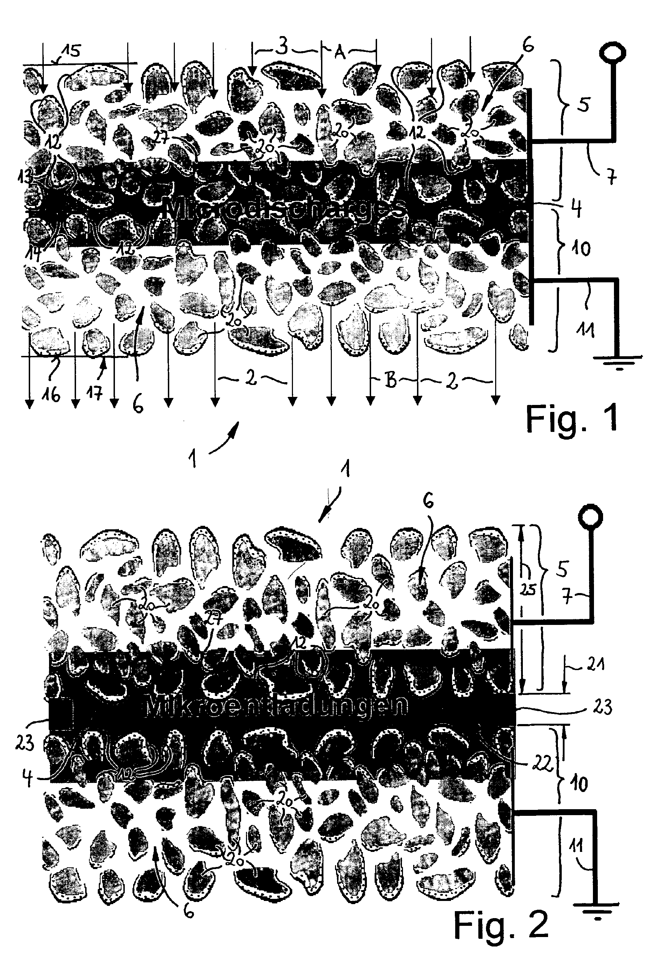

In Fig. 1 ist eine Vorrichtung 1 zum Erzeugen wenigstens eines fluiden Reaktionsproduktes 2 aus wenigstens einem fluiden Ausgangsstoff 3 mittels chemischer Reaktion im Plasma dielektrisch behinderter Entladungen 4 schematisch, teilweise im Schnitt, in einer Seitenansicht gemäß einer ersten Ausführungsform dargestellt.

Die Vorrichtung 1 hat eine erste, in Fig. 1 obere Elektrode 5 aus einem porösen. mit dem wenigstens einen fluiden Reaktionsprodukt 2 und dem wenigstens einen fluiden Ausgangsstoff durchströmbaren, elektrisch leitfähigen Körper 6. An dieser ersten Elektrode 5 liegt eine Wechselhochspannung 7 von wenigstens 0,5 kV an.

Ferner hat die Vorrichtung 1 eine zweite, in Fig. 1 untere Elektrode 10 aus einem ebensolchen porösen Körper 6. Diese zweite Elektrode 10 ist mit Masse 11 verbunden und der ersten Elektrode 5 zugeordnet. Gemäß der in Fig. 1 gezeigten Ausführungsform besteht diese Zuordnung darin, dass die Elektroden 5. 10 übereinander angeordnet sind, das heißt die erste Elektrode 5 liegt auf der zweiten Elektrode 10 auf. Eine solche Anordnung aus erster und zweiter Elektrode 5. 10 wird auch Elektrodenpaar genannt.

Zwischen den Elektroden 5, 10 ist eine dielektrische Schicht 12 vorgesehen. Gemäß einer bevorzugten Ausführungsform der Erfindung ist die dielektrische Schicht 12 eine Dünnschicht. insbesondere eine photokatalytische Dünnschicht aus Titandioxid $TiO_2$, besonders bevorzugt aus dem $TiO_2$-Mineral Anatas.

Die an die erste Elektrode angelegte Hochspannung 7 beträgt 0,5 bis etwa 30 kV, vorzugsweise etwa 15 kV, bei einer Frequenz zwischen 50 Hz und etwa 100 kHz Gemäß einer bevorzugten Ausführungsform der Erfindung ist die Hochspannung gepulst.

Zumindest eine der zueinander gewandten Oberflächen 13. 14 der Elektroden 5, 10 weist die dielektrische Schicht 12 auf. In Fig. 1 sind die aufeinander liegenden Oberflächen 13. 14 lediglich im linken Teil der Darstellung schematisch angedeutet. Gemäß einer anderen Ausführungsform weisen beide zueinander gewandten Oberflächen 13, 14 der Elektroden 5, 10 die vorgenannte dielektrische Schicht 12 auf. Eine solche Ausführungsform der dielektrischen Schicht 12 ist in den Fig. 1 bis 5 gezeigt. Vorzugsweise weisen auch die voneinander abgewandten Oberflächen 15, 16 der Elektroden 5, 10 die dielektrische Schicht 12 auf. Diese Ausführungsform ist in den Fig. 1 bis 3 gezeigt. Besonders bevorzugt weist die sichtbare Oberfläche 17 jeder Elektrode 5, 10 diese Schicht 12 auf. Letzteres bedeutet, dass die dielektrische Schicht 12 im Inneren eines jeden porösen Körpers 6 nicht vorgesehen ist, wie dies schematisch in den Fig. 1 bis 3 gezeigt ist. In Fig. 1 sind auch die voneinander abgewandten Oberflächen 15, 16 der Elektroden 5, 10 lediglich im linken Teil der Darstellung schematisch angedeutet. Die sichtbare Oberfläche 17 ist die gesamte äußere Oberfläche jedes porösen Körpers 17, welche optisch bzw. visuell wahrnehmbar ist.

Die Körper 6 der Elektroden 5, 10 weisen gesinterte, vorzugsweise schmelzextrahierte Metallfasern 20 auf. Die Metallfasem 20 sind vorzugsweise aus Edelstahl mit hohem katalytisch wirksamen Nickelanteil oder aus Nickel oder aus Edelstahl mit Raney-Nickel-Oberfläche gebildet. Es ist klar, dass die einzelnen Metallfasern 20 der porösen Körper 6 in den Darstellungen der Fig. 1 bis 3 vergrößert dargestellt sind.

Die porösen Körper 6 der Elektroden 5, 10 sind platten-. rohr- oder kugelförmig ausgehildet. In den Ausführungsformen der Fig. 1 bis 3 sind die Elektroden plattenförmig dargestellt. Die Anordnung der porösen Körper 6 und damit der Elektroden 5, 10 jedes Elektrodenpaars zueinander ist in den Ausführungsformen der Fig. 1 bis 3 unterschiedlich, das heißt die Zuordnung der Elektroden zueinander kann auf unterschiedliche Weise erfolgen.

In der Ausführungsform gemäß Fig. 1 sind die porösen Körper und damit die Elektroden ohne Belassung eines gegenseitigen Abstandes unmittelbar auf- oder nebeneinander angeordnet. Es ist auch möglich. die porösen Körper ohne Belassung eines gegenseitigen Abstandes konzentrisch zueinander anzuordnen In diesem Fall wären die Oberflächen 13 bis 17 gekrümmt.

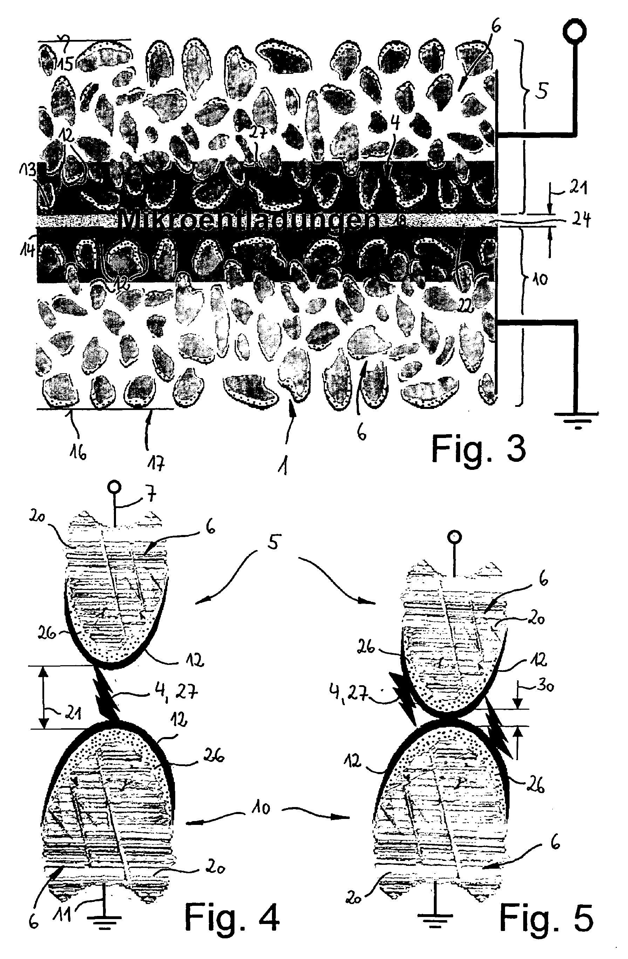

Gemäß den in den Fig. 2 und 3 gezeigten Ausführungsformen sind die porösen Körper der Elektroden unter Belassung eines gegenseitigen Abstandes 21 und unter Ausbildung eines dadurch erweiterten Entladungsspaltes 22 auf- oder nebeneinander angeordnet. Auch in diesem Fall ist es möglich, eine konzentrisch zueinander ausgebildete Anordnung der Körper bzw. Elektroden auszuwählen. Im Fall der in Fig. 2 gezeigten Ausführungsform ist zwischen den durchströmbaren Elektroden 5. 10 ein Isolierrahmen 23 vorgesehen, dessen Dicke den erweiterten Entladungsspalt 22 und damit auch den gegenseitigen Abstand 21 der Elektroden definiert.

Gemäß der in Fig. 3 gezeigten Ausführungsform der Erfindung ist zwischen den Körpern 6 der Elektroden 5, 10 und damit im erweiterten Entladungsspalt 22 eine Platte 24 angeordnet, die mit dem wenigstens einen fluiden Reaktionsprodukt 2 und dem wenigstens einen fluiden Ausgangsstoff 3 durchströmbar ist und ein zusätzliches Dielektrikum 18 bildet. Es ist auch möglich, dass diese Platte 24 das einzige Dielektrikum im Entladungsspalt 12 bildet, so dass letztere an den porösen Körpern 6, anders als in den Fig. 1 bis 3 dargestellt, entfallen kann. Die Dicke der Platte 24 legt den gegenseitigen Abstand 21 und damit die Stärke des erweiterten Entladungsspaltes 22 fest.

Wie in den Fig. 1 bis 3 gezeigt, können die Körper 6 der Elektroden 5, 10 bei den einzelnen Ausführungsformen identisch ausgebildet sein. Wie zuvor erwähnt, ist es aber auch möglich. die porösen Körper unterschiedlich auszubilden. solange zwischen den Elektroden überhaupt eine dielektrische Schicht 12 oder ein Dielektrikum 18 vorgesehen ist. Im Falle der Fig. 3 weisen also die Körper 6 der Elektroden 5, 10 an ihrer sichtbaren Oberfläche 17 die dielektrische Schicht 12 auf, ferner ist die Platte 24 als Dielektrikum 18 ausgebildet.

Die Platte 24 kann eine photokatalytische Schicht, vorzugsweise Dünnschicht, aufweisen und aus Schaumkeramik oder versinterten Keramikfasern hergestellt sein. Vorzugsweise ist die Porosität dieser Platte größer oder gleich der Porosität der porösen Körper 6 der Elektroden 5. 10. Die Dicke der Platte 24 beträgt vorzugsweise etwa 1 bis 1,5 mm.

Wie in Fig. 1 gemäß der Pfeile A für den wenigstens einen fluiden Ausgangsstoff 3 und der Pfeile B für das wenigstens eine fluide Reaktionsprodukt 2 verdeutlicht. sind die Körper 6 der Elektroden 5. 10 im Wesentlichen senkrecht zu ihrer Hauptflächenausdehnung, das heißt in Richtung ihrer Dicke 25 (diese ist beispielhaft in Fig. 2 angegeben) durchströmbar.

In den Fig. 4 und 5 sind verschiedene Ausführungsformen schematisch dargestellter Teile bzw. Metallfasern 20 der porösen Körper 6 der Elektroden in einer vergrößerten Darstellung gezeigt.

Aus diesen Darstellungen ist erkennbar, dass jede durchströmbare Elektrode 5. 10 zwischen ihrem jeweiligen porösen Körper 6 und der dielektrischen Schicht 12 des jeweiligen Körpers 6 eine vorzugsweise aus Titan Ti als Haftvermittler gebildete Übergangsschicht 26 aufweist. Diese Übergangsschicht 26 ist in sämtlichen, in den Fig. 1 bis 5 dargestellten Ausführungsformen gepunktet verdeutlicht. Es ist klar, dass in dem Fall, in welchem das Dielektrikum ausschließlich durch die in Fig. 3 gezeigte Platte 24 gebildet ist, auch auf den einzelnen Metallfasern 20 keine dielektrische Schicht 12 und somit auch keine Übergangsschicht 26 ausgebildet ist.

In den Fig. 4 und 5 sind Mikroentladungen 27, welche dielektrisch behinderte Entladungen 4 darstellen, in Form gezackter "Blitze" gezeigt.

Die in Fig. 4 gezeigte Ausführungsform verdeutlicht etwa den gegenseitigen Abstand 21 der einzelnen Elektroden aus den Ausführungsformen der Fig. 2 und 3. Es ist klar. dass im Fall der Ausführungsform der Fig. 3 der gegenseitige Abstand 21 der Elektroden voneinander durch die Platte 24 überbrückt ist. welche in Fig. 4 nicht eingezeichnet ist.

In Fig. 5 ist die Anordnung der Elektroden zueinander gemäß der in Fig. 1 gezeigten Ausführungsform verdeutlicht, bei der die plattenförmigen Elektroden auf- bzw. übereinander angeordnet sind. Letztlich besteht auch bei dieser Ausführungsform ein Entladungsspalt 30 zwischen den Körpern 6 der Elektroden 5, 10. Die Weite des Entladungsspaltes 30 entspricht dabei etwa der Dicke der dielektrischen Schichten 12, welche auf den zueinander gewandten Oberflächen der Metallfasern 20 der porösen Körper aufgebracht sind. Insofern ist ein unmittelbarer Kontakt zwischen den Körpern der Elektroden verhindert. Es kommt. wie zuvor erwähnt, zwischen den Elektroden daher lediglich zu Glühentladungen oder dielektrisch behinderten Entladungen 4 und insofern lediglich zu Mikroentladungen 27. nicht jedoch zur Ausbildung eines Lichtbogens.

Gemäß einer bevorzugten Ausführungsform der Erfindung sind mehrere Paare von Elektroden 5, 10 vorzugsweise modul- und stapelartig in Strömungsrichtung hintereinander und insofern etwa parallel zueinander angeordnet. Es ist klar, dass sich dabei die erste Elektrode des nächst folgenden Elektrodenpaars an die zweite Elektrode des unmittelbar vorhergehenden Elektrodenpaars anschließt. Ein derartiger Elektrodenstapel ist üblicherweise in einem elektrisch isolierenden, hochspannungsfesten und strahlungsabsorbierenden Gehäuse (nicht näher gezeigt) angeordnet, das die gasdichten, hochspannungsfesten, elektrischen Anschlüsse für die durchströmbaren Elektroden und auch die Anschlüsse (nicht gezeigt) zum Zuführen des wenigstens einen Ausgangsstoffs und zum Abführen des wenigstens einen Reaktionsproduktes aufweist. Somit sind die durchströmbaren Elektroden vorzugsweise planparallel bzw. im Falle röhren- oder zylinderartiger. kugelartiger Elektrodenanordnungen koaxial bzw. konzentrisch zueinander ausgerichtet. Das Gehäuse kann beispielsweise aus Keramik gebildet sein. Die Anordnung der Elektroden in einem Plattenstapel wird auch "Stack"-Anordnung genannt.

Wie zuvor bereits angedeutet, bilden sich zwischen den durchströmbaren Elektroden 5, 10 Mikroentladungen 27 aus. Diese erzeugen ein Niedertemperaturplasma. Dabei regen die Photonenemissionen des Glühplasmas oder der Mikroentladungen 27 die vorzugsweise photokatalytischen Grenzflächen zum Cracken der chemischen Bindungen der Reaktionsstoffe durch Elektronentausch an. Das Niedertemperaturplasma, ein ionisiertes. leitfahiges Gas, ist ein Nichtgleichgewichtsplasma bei atmosphärischem bzw. überatmosphärischem Druck bis etwa 3 bar. Bei diesem Plasma haben die äußeren Elektronen eine hohe Temperatur von beispielsweise 10.000 °C oder darüber, wohingegen die schwereren Kembausteine, nämlich die Protonen und Neutronen, etwa Umgebungstemperatur aufweisen. Die Photonenemissionen der Mikroentladungen im UV-Bereich begünstigen an den aktivierten Grenzflächen den Elektronentausch, durch den die chemischen Bindungen gecrackt werden. Letztlich entstehen Etektronentochpaare an der angeregten Grenzfläche, die mit den Molekülen der Reaktionsstoffe Wechselwirkungen herbeiführen und einen Ladungsaustausch bzw. Elektronenaustausch ermöglichen. Dadurch wird die chemische Bindung im Gasmolekül, d.h. im Ausgangsstoff, gecrackt. eine Zersetzung des bzw. der jeweiligen Reaktionsteilnehmer in seine Bestandteile ist ermöglicht. Es ist klar, dass die Mikroentladungen 27 zunächst im Entladungsspalt zwischen den Elektrodenplatten zünden, wobei der vorgenannte Prozess, wie in den Fig. 1 bis 3 angeordnet, nicht ausschließlich im Entladungsspalt sondern auch ein Stück weit innerhalb des jeweiligen porösen Körpers stattfindet. Das Aufbringen der dielektrischen, vorzugsweise photokatalytischen Schicht auf die Oberfläche jedes porösen Körpers kann dabei so erfolgen. wie dies in der deutschen Patentanmeldung 102 10 465.4 beschrieben ist.

Gemäß einer besonders bevorzugten Ausführungsform der Erfindung ist der wenigstens eine fluide Ausgangsstoff 3 ein Gemisch aus Kohlenwasserstoffen. vorzugsweise einem Brennstoff wie Methan $CH_4$ oder Erdgas. Flüssiggas, vergastem Benzin oder vergastem Dieselkraftstoff. und Wasser $H_2O$, vorzugsweise Wasserdampf, und das wenigstens eine fluide Reaktionsprodukt 2 vorzugsweise ein Gemisch aus Wasserstoff $H_2$ und Kohlendioxid $CO_2$.

Mit Hilfe der erfindungsgemäßen Vorrichtung ist es daher möglich, aus Kohlenwasserstoffen und Wasserdampf durch Aufbrechen. das heißt Cracken, der chemischen Bindungen des Kohlenwasserstoffs an einer photoaktivierten Grenzfläche durch Elektronentausch Wasserstoff und Kohlendioxid zu erzeugen. Dabei kann die Prozessenergie durch UV-Licht und durch Plasmaenergie in den Prozess eingekoppelt werden. Diesem Prozess liegt folgende Reaktionsgleichung zugrunde:

$$CH_4 + 2H_2O \rightarrow 4H_2 + CO_2$$

Dieser Prozess ist ermöglicht durch das Zusammenspiel durchströmbarer, offenzelliger Sinterwerkstoffe aus Metallfasern mit großen Oberflächen und hoher Porosität, einer gezielten Abscheidung photokatalytisch aktiver Dünnschichten auf der beleuchtbaren Oberfläche der Metallfasern, durch hocheffektive UV-Strahlungsquellen aus dem Niedertemperaturplasma und durch Anwendung nanostrukturierter Oberflächen. Insofern ist es mit Hilfe der erfindungsgemäßen Vorrichtung möglich, aus getanktem Erdgas in einem photokatalytischen on-board-Prozess die für die Funktion eines Bremstoffzellenantriebs eines Kraftfahrzeuges erforderliche Menge eines wasserstoffreichen Brenngases bereitzustellen.

Die Dicke der dielektrischen Schicht 12 auf den einzelnen Metallfasem kann im Nanometerbereich bis in den Bereich mehrerer Mikrometer liegen. Die Porosität der porösen Körper 6 der Elektroden beträgt vorzugsweise mindestens 50 %. Die dielektrische Schicht weist eine relative Dielektrizitätszahl von mindestens $\varepsilon$ = 5 auf. Die porösen Körper 6 und gegebenenfalls die Platte 24 sind offenporig durchströmbar ausgebildet. Die Metallfasern an den zueinander gewandten Oberflächen der porösen Körper der Elektroden können im Bereich der quasi optischen Sicht mit Platin, Palladium, Rhenium oder anderen Metallschichten als Kontaktkatalysator zur Unterstützung der Ionisierung von Wasser bzw. Kohlenwasserstoffen beschichtet sein. Die dielektrischen. vorzugsweise photokatalytischen Dünnschichten der Elektroden sind. wie zuvor erwähnt. einander zugeordnet und stellen den Entladungsspalt der dielektrisch behinderten Entladung dar. Es ist klar, dass im Fall der Austiihrungsfurmen der Fig. 2 und 3 die Durchschlagsfestigkeit der Vorrichtung aufgrund des größeren Abstands der Elektroden erhöht ist. Mit der Dicke der dielektrischen Schicht steigt auch die Spannungsfestigkeit der gesamten Vorrichtung. Beim Pulsen der Hochspannung ist das Puls/Pausenverhältnis entsprechend den zu reformierenden Reaktionsteilnehmern. insbesondere dem Brennstoff. zu wählen. Je steiler die Flankensteilheit des Spannungsstoßes ist, umso besser ist die Strahlungswirkung, nämlich die Emission der Photonen, welche die Grenzflächen zu einem Photokatalysator macht. Zum Verhindern von Rekombinationsreaktionen können die Metallfasern im Innern der porösen Körper der Elektroden mit einer Kontaktkatalysatoroberfläche versehen sein bzw. aus einem Kontaktkatalysator bestehen Hier können, wie zuvor erwähnt, vorzugsweise Nickelfasern oder nickelreiche Edelstahlfasern bzw. mit Raney-Nickel-Oberfläche versehene Fasern zum Einsatz kommen.

Die Dauer der Mikroentladungen kann etwa 10 Nanosekunden betragen. Die Mikroentladungen entstehen an exponierten Stellen der einander gegenüberliegenden Grenzflächen und konzentrieren im Moment der Entladung das elektrische Feld.

Die vier wichtigsten Reaktionen in einem Nichtgleichgewichtsplasma sind Ionisationsprozesse, Zerfallsprozesse, Elektronenanlagenmgsprozesse und Rekombinationsprozesse.

Die vorzugsweise plattenförmigen Elektroden können auch so beabstandet sein. dass sie einen Resonatorraum bilden. in dem mittels Hochspannung mit Mikrowellenfrequenzen ein Mikrowellenplasma gezündet werden kann. In diesem Fall finden zwischen den Elektroden Mikrowellenentladungen statt, wobei die Abmessungen des Resonatorraums und auch der gegenseitige Abstand der Elektroden Bruchteile oder Vielfache der Wellenlänge $\lambda$ der Mikrowelle sind. Es ist klar, dass auch in diesem Fall das Gehäuse der Vorrichtung aus einem isolierenden Material besteht, so dass sich insgesamt ein isulierter Resonator ergibt.

Mit Hilfe der erfindungsgemäßen Vorrichtung ist es insbesondere aber nicht ausschließlich möglich. eine photokatalytische Kohlenwasserstoffspaltung im Plasma einer dielektrisch behinderten Entladung zur Gewinnung eines wasserstofthaltigen Brenngases für Brennstoffzellen durchzuführen. Es ist klar, dass dieses Einsatzgebiet lediglich beispielhaft und nicht beschränkend angegeben ist.

**Patentansprüche**

1. Vorrichtung zum Erzeugen wenigstens eines fluiden Reaktionsproduktes (2) aus wenigstens einem fluiden Ausgangsstoff (3) mittels chemischer Reaktion im Plasma dielektrisch behinderter Entladungen (4),
   mit einer ersten Elektrode (5) aus einem porösen, mit dem wenigstens einen Reaktionsprodukt (2) und dem wenigstens einen Ausgangsstoff (3) durchströmbaren, elektrisch leitfähigen Körper (6), an welcher ersten Elektrode (5) eine Hochspannung von wenigstens 0,5 kV anliegt,
   einer zweiten Elektrode (10) aus einem ebensolchen Körper (6), welche mit Masse (11) verbunden und der ersten Elektrode (5) zugeordnet ist, und
   einer zwischen den durchströmbaren Elektroden (5, 10) vorgesehenen dielektrischen Schicht (12).

2. Vorrichtung nach Anspruch 1, **dadurch gekennzeichnet, dass** die Hochspannung 0,5 bis etwa 30 kV, vorzugsweise etwa 15 kV, bei einer Frequenz zwischen 50 Hz und etwa 100 kHz beträgt und vorzugsweise gepulst ist.

3. Vorrichtung nach Anspruch 1 oder 2. **dadurch gekennzeichnet, dass** zumindest eine der einander zugewandten Oberflächen (13, 14) der Elektroden (5, 10) oder beide einander zugewandten Oberflächen (13, 14) der Elektroden (5, 10) und vorzugsweise auch die voneinander abgewandten Oberflächen (15, 16) der Elektroden (5, 10) und besonders bevorzugt die sichtbare Oberfläche (17) jeder Elektrode (5, 10) die dielektrische Schicht (12) aufweisen/aufweist.

4. Vorrichtung nach einem der vorhergehenden Ansprüche, **dadurch gekennzeichnet, dass** die Körper (6) der Elektroden (5, 10) gesinterte, vorzugsweise schmelzextrahierte Metallfasern (20) aufweisen, die vorzugsweise aus Edelstahl mit hohem katalytisch wirksamen Nickelanteil oder aus Nickel oder aus Edelstahl mit Raney-Nickel-Oberfläche gebildet sind.

5. Vorrichtung nach einem der vorhergehenden Ansprüche. **dadurch gekennzeichnet, dass** die dielektrische Schicht (12) eine Dünnschicht. vorzugsweise eine photokatalytische Dünnschicht aus Titandioxid $TiO_2$, besonders bevorzugt aus dem $TiO_2$-Mineral Anatas. ist.

6. Vorrichtung nach einem der vorhergehenden Ansprüche. **dadurch gekennzeichnet, dass** jede Elektrode (5, 10) zwischen ihrem porösen Körper (6) und der dielektrischen Schicht (12) dieses Körpers (6) eine vorzugsweise aus Titan Ti als Haftvermittler gebildete Übergangsschicht (26) aufweist.

7. Vorrichtung nach einem der vorhergehenden Ansprüche. **dadurch gekennzeichnet, dass** die porösen Körper (6) platten- rohr- oder kugelförmig ausgebildet und ohne Belassung eines gegenseitigen Abstandes unmittelbar auf- oder nebeneinander oder konzentrisch zueinander oder unter Belassung eines gegenseitigen Abstandes (21) und Ausbildung eines erweiterten Entladungsspaltes (22) auf- oder nebeneinander oder konzentrisch zueinander angeordnet sind.

8. Vorrichtung nach einem der vorhergehenden Ansprüche, **dadurch gekennzeichnet, dass** zwischen den Körpern (6) der Elektroden (5, 10) und damit im erweiterten Entladungsspalt (22) eine mit dem wenigstens einen fluiden Reaktionsprodukt (2) und dem wenigstens einen fluiden Ausgangsstoff (3) durchströmbare, ein Dielektrikum (18) bildende Platte (24) angeordnet ist, welche zumindest eine photokatalytische Schicht, vorzugsweise Dünnschicht, aufweisen und aus Schaumkeramik oder versinterten Keramikfasern hergestellt sein kann.

9. Vorrichtung nach einem der vorhergehenden Ansprüche. **dadurch gekennzeichnet, dass** die Körper (6) der Elektroden (5, 10) im Wesentlichen senkrecht zu ihrer Hauptflächenausdehnung, das heißt in Richtung ihrer Dicke (25), durchströmbar sind.

10. Vorrichtung nach einem der vorhergehenden Ansprüche, **dadurch gekennzeichnet, dass** mehrere Paare von Elektroden (5. 10) vorzugsweise modul- und stapelartig in Strömungsrichtung hintereinander und etwa parallel zueinander angeordnet sind.

11. Vorrichtung nach einem der vorhergehenden Ansprüche, **dadurch gekennzeichnet, dass** sich zwischen den Elektroden (5, 10) Mikroentladungen (27) ausbilden, welche ein Niedertemperaturplasma erzeugen, wobei die Photonenemissionen der Mikroentladungen (27) die vorzugsweise photokatalytischen Grenzflächen zum Cracken der chemischen Bindungen durch Elektronentausch anregen.

**12.** Vorrichtung nach einem der vorhergehenden Ansprüche. **dadurch gekennzeichnet, dass** der wenigstens eine fluide Ausgangsstoff (3) ein Gemisch aus Kohlenwasserstoffen, vorzugsweise einem Brennstoff wie Methan $CH_4$ oder Erdgas. Flüssiggas, Alkoholen, vergastem Benzin oder vergastem Diesel, und Wasser $H_2O$, vorzugsweise Wasserdampf, und das wenigstens eine fluide Reaktionsprodukt (2) vorzugsweise ein Gemisch aus Wasserstoff $H_2$ und Kohlendioxid $CO_2$ ist.

Fig. 1

Fig. 2

Fig. 3

Fig. 4

Fig. 5

# EP 1 535 660 A1

**Europäisches Patentamt**

**EUROPÄISCHER RECHERCHENBERICHT**

Nummer der Anmeldung

EP 04 02 7771

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2003/136661 A1 (KONG PETER C ET AL) 24. Juli 2003 (2003-07-24) | 1-3,7,9, 11,12 | B01J19/08 C01B3/34 |
| A | * Seite 1, Absatz 12 - Seite 2, Absatz 14 * | 4 | |
| | * Seite 2, Absatz 23 - Seite 3, Absatz 29 * | | |
| | * Seite 4, Absatz 44 * ----- | | |
| X | DE 197 17 890 C1 (INSTITUT FUER NIEDERTEMPERATUR-PLASMAPHYSIK E.V. AN DER ERNST-MORITZ-A) 8. April 1999 (1999-04-08) | 1-3,9,12 | |
| A | * Spalte 3, Zeile 3 - Spalte 4, Zeile 11; Abbildungen * ----- | 4 | |

RECHERCHIERTE SACHGEBIETE (Int.Cl.7)

B01J
C01B

Der vorliegende Recherchenbericht wurde für alle Patentansprüche erstellt

| Recherchenort | Abschlußdatum der Recherche | Prüfer |
|---|---|---|
| Den Haag | 3. März 2005 | Van Belleghem, W |

EPO FORM 1503 03.82 (P04C03)

**EP 1 535 660 A1**

**ANHANG ZUM EUROPÄISCHEN RECHERCHENBERICHT
ÜBER DIE EUROPÄISCHE PATENTANMELDUNG NR.**

EP 04 02 7771

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2005

| Im Recherchenbericht angeführtes Patentdokument | Datum der Veröffentlichung | Mitglied(er) der Patentfamilie | Datum der Veröffentlichung |
|---|---|---|---|
| US 2003136661 A1 | 24-07-2003 | KEINE | |
| DE 19717890 C1 | 08-04-1999 | DE 59809089 D1 | 28-08-2003 |
| | | WO 9848922 A1 | 05-11-1998 |
| | | EP 0979135 A1 | 16-02-2000 |
| | | JP 2001522302 T | 13-11-2001 |
| | | US 6517786 B1 | 11-02-2003 |

EPO FORM P0461

Für nähere Einzelheiten zu diesem Anhang : siehe Amtsblatt des Europäischen Patentamts, Nr.12/82